# EUROPEAN PATENT APPLICATION

(11) **EP 4 418 068 A1**
(43) Date of publication of application: **21.08.2024**
(21) Application number: 23168456.4
(22) Date of filing: 18.04.2023
(51) Int. Cl.: G06F 1/16, H01R 31/06, G06F 13/38, H01R 31/00, H01R 24/60

(54) **HUB POWER DEVICE**

(30) Priority: 17.02.2023 TW 112105841
(71) Applicant: Jess-Link Products Co., Ltd., New Taipei City 235 (TW)
(72) Inventor: CHI, Chung-Ping, New Taipei City 235 (TW); WU, Kun-Chan, New Taipei City 235 (TW)
(74) Representative: 2K Patentanwälte Blasberg Kewitz & Reichel

(57) **Abstract**

A hub power device includes: a power supply (10) including a first combination surface (13) having a first connector female head (131) and a second connector female head (132); and a hub (20) including a first expansion surface (21) having a first connection port (211) and a second combination surface (22) having a connector male head (221) and a first positioning tenon (222); when being assembled, the second combination surface (22) is attached to the first combination surface (13), the connector male head (221) is electrically connected to the first connector female head (131), and the first positioning tenon (222) is inserted and positioned in the second connector female head (132). The electric power is sufficiently supplied to the hub (20), and a cable used for connecting the power supply (10) and the hub is not needed (20).

## Description

### BACKGROUND OF THE DISCLOSURE

### Technical Field

The present disclosure relates to an expansion port, especially to a hub power device having a power supply and a hub and no cable is required for connecting the power supply and the hub.

### Description of Related Art

With the development of the notebook computer to be thin and also provided with high performance, the volume of the notebook computer is reduced as much as possible by every manufacturer and the high performance and the high efficiency are still kept. As such, various expansion ports (for example USB-A port, USB-C port, RJ45 port, HDMI port, VGA port, SD port, Micro SD port or 3.5mm headphone jack port) originally disposed in the notebook computer have been reduced to single USB-C connection port, and a hub is used to achieve an expanding function to remain the thin characteristic of the notebook computer.

However, a related-art hub is supplied with electric power via a power and signal transmitting cable of the notebook computer. As such, if more connection ports are disposed in the hub, the notebook computer may not sufficiently supply electric power for operations. A transformer and a charging cable are additionally provided to the hub for the purpose of supplying electric power. However, the charging cable and the connection cable of the transformer have disadvantages of power consuming, not easy to be carried around, not easy to be stored and occupying an unnecessary space.

Accordingly, the applicant of the present disclosure has devoted himself for improving the mentioned shortages.

### SUMMARY OF THE DISCLOSURE

The present disclosure is to provide a hub power device, in which a hub is sufficiently supplied with the electric power, and no cable is needed for connecting a power supply and the hub, and the power supply and the hub are firmly connected and not easy to be loosened.

Accordingly, the present disclosure provides a hub power device, which includes a power supply and a hub. The power supply has a first combination surface. The first combination surface has a first connector female head and a second connector female head. The hub has a first expansion surface and a second combination surface. The first expansion surface has a first connection port. The second combination surface has a connector male head and a first positioning tenon. When the hub is assembled with the power supply, the second combination surface is attached to the first combination surface, the connector male head is inserted and electrically connected to the first connector female head, and the first positioning tenon is inserted and positioned in the second connector female head.

According to one embodiment of the present disclosure, the connector male head and the first connector female head are a USB-C connector assembly matching with each other, and the first positioning tenon and the second connector female head are connectors matching with each other.

According to one embodiment of the present disclosure, the first positioning tenon and the second connector female head are a USB-C connector assembly matching with each other.

According to one embodiment of the present disclosure, the first combination surface further has a third connector female head, and the second combination surface further has a second positioning tenon. When the hub is assembled with the power supply, the second positioning tenon is inserted and positioned in the third connector female head.

According to one embodiment of the present disclosure, the second positioning tenon and the third connector female head are connectors matching with each other.

According to one embodiment of the present disclosure, the second positioning tenon and the third connector female head are a USB-A connector assembly matching with each other.

According to one embodiment of the present disclosure, the first connector female head, the second connector female head and the third connector female head are arranged parallelly on the first combination surface. The connector male head, the first positioning tenon and the second positioning tenon are arranged parallelly on the second combination surface.

According to one embodiment of the present disclosure, the first connection port is a USB-A port, a RJ45 port, a SD port, a Micro SD port, a HDMI port, a VGA port, a DisplayPort port or a 3.5mm headphone jack port.

According to one embodiment of the present disclosure, the hub further includes a second expansion surface, the second expansion surface has a second connection port, and the second connection port is a USB-A port, a RJ45 port, a SD port, a Micro SD port, a HDMI port, a VGA port, a DisplayPort port or a 3.5mm headphone jack port.

According to one embodiment of the present disclosure, the hub further includes a third expansion surface, the third expansion surface has a plurality of third connection ports, and each of the third connection ports is a USB-A port.

According to one embodiment of the present disclosure, the hub further includes a third expansion surface, the third expansion surface has a third connection port, and the third connection port is a USB-A port, a RJ45 port, a SD port, a Micro SD port, a HDMI port, a VGA port, a DisplayPort port or a 3.5mm headphone jack port.

According to one embodiment of the present disclosure, the hub includes a power and signal transmitting cable.

Advantages achieved by the present disclosure are as follows. Through the connector male head of the hub being inserted and electrically connected to the first connector female head of the power supply, the electric power is sufficiently supplied to the hub, and a cable used for connecting the power supply and the hub is not needed, thus advantages of easy to be carried around, easy to be stored and having a better appearance are provided. Through the first positioning tenon of the hub being inserted and positioned in the second connector female head of the power supply, the power supply and the hub are firmly connected and not easy to be loosened.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 is a perspective exploded view according to the present disclosure;
FIG. 2 is a perspective view showing the assembly according to the present disclosure;
FIG. 3 is a top view according to the present disclosure; and
FIG. 4 is a perspective view showing the assembly of the hub according to the present disclosure.

### DETAILED DESCRIPTION OF THE DISCLOSURE

It is to be understood that the terms for indicating positions and the location relation, for example "front", "rear", "left", "right", "front end", "rear end", "distal end", "vertical", "horizontal", "top end" and "bottom end", are based on the positions and the location relation disclosed in the drawings, and only used for disclosing the present disclosure and not used for indicating or implying the specified location of the device or the components or the specified structure and operation in certain location, thus the present disclosure is not intended to be limiting.

For example, the terms of "first", "second", "third", "forth" and "fifth" are used for illustrating each unit, component, area, layer and/or part. The component, the unit, the area, the layer and/or the part are not limited by the terms. These terms are only used for separating the element, the assembly, the area, the layer, or the part. Unless being clearly indicated according to the whole specification, the terms for example "the first", "the second", "the third", "the fourth" and "the fifth" are not used for implying the order or sequence.

The technical contents of this disclosure will become apparent with the detailed description of embodiments accompanied with the illustration of related drawings as follows. It is intended that the embodiments and drawings disclosed herein are to be considered illustrative rather than restrictive.

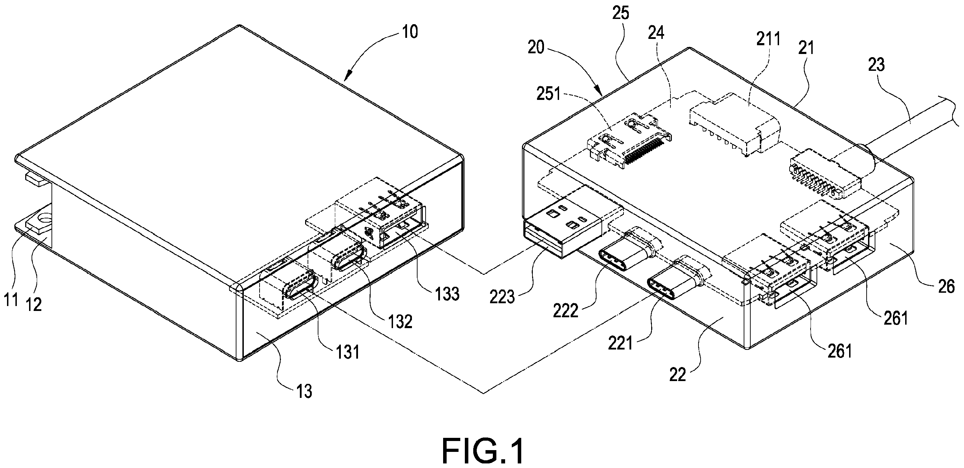

Please from FIG. 1 to FIG. 4, the present disclosure provides a hub power device, which includes a power supply 10 and a hub 20 which may be mutually assembled or detached.

In some embodiments, the power supply 10 is substantially in a rectangular shape, here is not intended to be limiting. The appearance of the power supply 10 may be in any other geometrical shape.

The power supply 10 includes a plug 11, and the plug 11 is inserted in a socket of the public power to obtain electric power. In some embodiments, the plug 11 of the power supply 10 is rotatable. In some embodiments, the plug 11 is rotated to be stored in a recess 12 of the power supply 10 when the plug 11 is not used. When the electric power needs to be used, the plug 11 is rotated 90 degrees to be exposed out from the power supply 10 to make the plug 11 be inserted in the socket of the public power. As such, the plug 11 may be hidden in the power supply 10 to provide an advantage of easy to be carried around. Here is not intended to be limiting, the plug 11 may be directly fastened on the power supply 10, or the plug 11 is connected to the power supply 10 via an extended cable.

At least one fitted circuit board (not labeled in figures), a transformer (not labeled in figures), a wave filter (not labeled in figures) and a rectifier (not labeled in figures) are disposed in the power supply 10. As such, the alternative current of the public power is converted into the direct current electricity with a rated voltage to be supplied to an electronic device. The above-mentioned technical features are omitted for brevity, here is not intended to be limiting.

Please refer to FIG. 1, the power supply 10 has a first combination surface 13. The first combination surface 13 has a first connector female head 131 and a second connector female head 132. The first connector female head 131 and the second connector female head 132 are electrically connected to the fitted circuit board (not labeled in figures) in the power supply 10.

In some embodiments, the hub 20 is in a rectangular shape, here is not intended to be limiting. The appearance of the hub 20 may be in any other geometrical shape. As shown in FIG. 1, the hub 20 has a first expansion surface 21 and a second combination surface 22. The first expansion surface 21 has a first connection port 211. In some embodiments, there is one first connection port 211, here is not intended to be limiting. For example, there are equal to or more than two first connection ports 211. In some embodiments, the appearance and the size of the second combination surface 22 are corresponding to the appearance and the size of the first combination surface 13, here is not intended to be limiting. The second combination surface 22 has a connector male head 221 and a first positioning tenon 222. The connector male head 221 is electrically connected to a hub circuit board 24 disposed in the hub 20. In some embodiments, the hub circuit board 24 is a rectangular board member, and connected to the connector male head 221 and the first positioning tenon 221 disposed at one side of the hub circuit board 24.

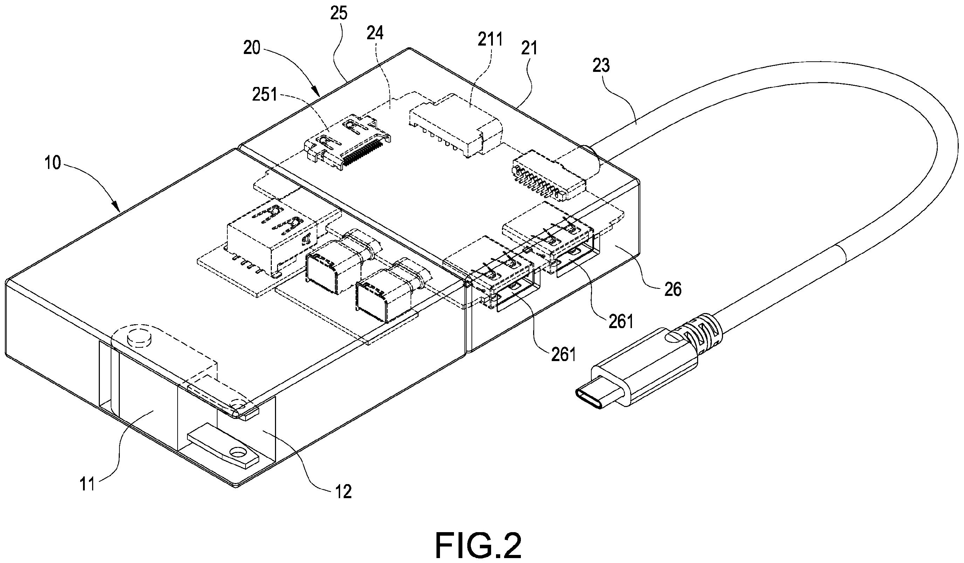

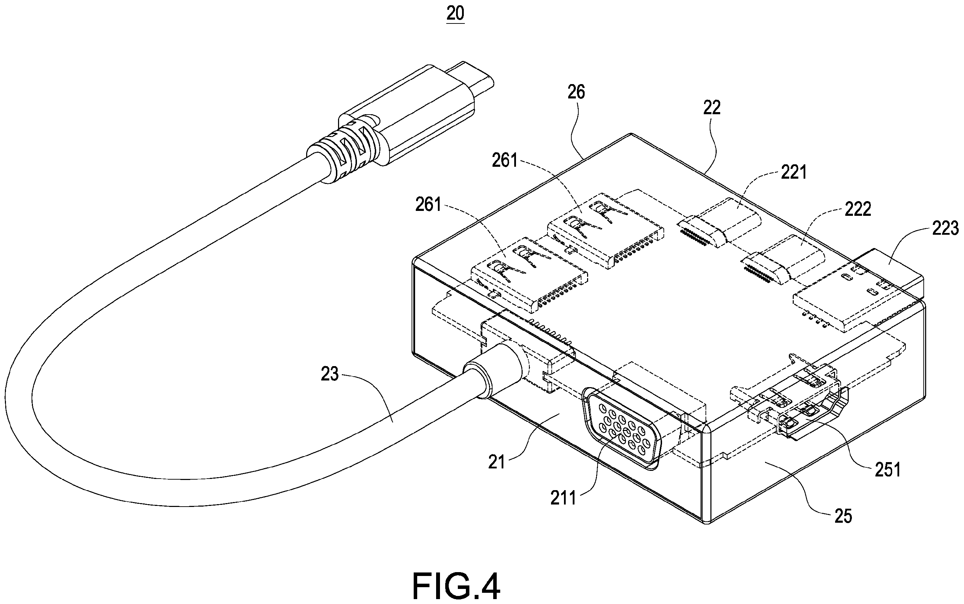

Please refer to FIG. 2 and FIG. 4, the hub 20 has a power and single transferring cable 23, thus the hub 20 is connected to the electronic device to provide a function of transmitting power and signals. One end of the power and signal transmitting cable 23 is fastened and electrically connected to the hub circuit board 24 disposed in the hub 20. In some embodiments, another end of the power and signal transmitting cable 23 is a USB-C connector, as shown in FIG. 2, here is not intended to be limiting. For example, the another end of the power and signal transmitting cable 23 may be a USB-A connector, a USB-B connector, s Micro USB connector, a Mini USB connector or a Lighting connector according to the design or actual operation requirements. The power and signal transmitting cable 23 of the present disclosure may be located on any surface, other than the second combination surface 22, of the hub 20, thus an interference of the assembly of the hub 20 and the power supply 10 is avoided. In some embodiments, the power and signal transmitting cable 23 is located on the first expansion surface 21, here is not intended to be limiting.

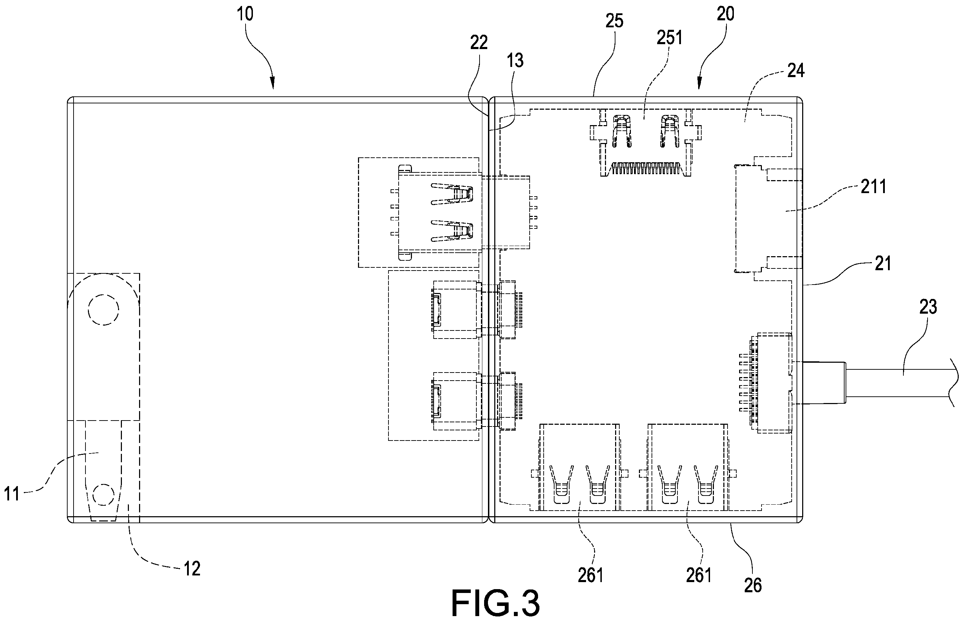

Please refer to FIG. 2 and FIG. 3, when the hub 20 is assembled with the power supply 10, the second combination surface 22 is attached to the first combination surface 13, the connector male head 221 is inserted and electrically connected to the first connector female head 131, and the first positioning tenon 222 is inserted and positioned in the second connector female head 132. As such, through the connector male head 221 of the hub 20 being inserted and electrically connected to the first connector female head 131 of the power supply 10, the power supply 10 sufficiently supplies the electric power to the hub 20 to make the electronic device connected to the hub 20 be operated, and a cable used for connecting the power supply 10 and the hub 20 is not needed, thus advantages of easy to be carried around, easy to be stored, not occupying an unnecessary space and providing a better appearance are provided. The first positioning tenon 222 of the hub 20 is inserted and positioned in the second connector female head 132 of the power supply 10, thus the power supply 10 and the hub 20 are firmly connected and not easy to be loosened, and the whole impact resisting structural strength is enhanced, and the connector male head 221 and the first connector female head 131 are prevented from being directly damaged when the connecting location of the hub 20 and the power supply 10 is impacted.

Details are provided as follows. In some embodiments, the connector male head 221 and the first connector female head 131 are a USB-C connector assembly matching with each other as shown in FIG. 1 to provide a high-efficient power supplying effect, here is not intended to be limiting. For example, the connector male head 221 and the first connector female head 131 may be a USB-A connector assembly matching with each other. In some embodiments, the first positioning tenon 222 and the second connector female head 132 are a USB-C connector assembly matching with each other, here is not intended to be limiting. For example, the first positioning tenon 222 and the second female connector head 132 may be any connector assembly as long as the inserting and positioning effect is achieved. For example, instead of a connector corresponding to the second female connector head 132, the first positioning tenon 222 may be a plastic structure having the appearance correspondingly inserted in the second female connector head 132, thus the production cost is saved, here is not intended to be limiting.

For further increasing the fastening effect and the impact resisting capability between the power supply 10 and the hub 20, the first combination surface 13 of the present disclosure further has a third connector female head 133, and the second combination surface 22 further has a second positioning tenon 223. The third connector female head 133 is electrically connected to the fitted circuit board (not labeled in figures) in the power supply 10. In some embodiments, the second positioning tenon 223, the connector male head 221 and the first positioning tenon 222 are disposed at one side of the hub circuit board 24. When the hub 20 is assembled with the power supply 10, the second positioning tenon 223 is inserted and positioned in the third connector female head 133. In some embodiments, the second positioning tenon 223 and the third connector female head 123 are a USB-A connector assembly matching with each other, here is not intended to be limiting. For example, the second positioning tenon 223 and the third connector female head 133 may be any connector assembly as long as the inserting and positioning effect is achieved. For example, instead of a connector corresponding to the third female connector head 133, the second positioning tenon 223 is a plastic structure having the appearance correspondingly inserted in the third female connector head 133, thus the production cost is saved, here is not intended to be limiting.

Details are provided as follows. In some embodiments, the first connector female head 131, the second connector female head 132 and the third connector female head 133 are parallelly arranged from left to right on the first combination surface 13. The connector male head 221, the first positioning tenon 222 and the second positioning tenon 223 are correspondingly and parallelly arranged from right to left on the second combination surface 22, thus the fastening effect and the impact resisting capability between the power supply 10 and the hub 20 are enhanced without increasing the thickness of the hub power device of the present disclosure. Here is not intended to be limiting, the first connector female head 131, the second connector female head 132 and the third connector female head 133 of the present disclosure may be arranged in a different method and may be adjusted according to actual needs. For example, the third connector female head 133 may be located between the first connector female head 131 and the second connector female head 132, or the first connector female head 131, the second connector female head 132 and the third connector female head 133 may be arranged from top to down, or the first connector female head 131 is arranged from top to down with the second connector female head 132 are arranged from top to down and is arranged from left to right with the third connector female head 133, and any location arranging variation shall be within the scope of the present disclosure.

In some embodiments, the first connection port 211 is the VGA port as shown in FIG. 4, and the first connection port 211 and the power and signal transmitting cable 23 are arranged from left to right, here is not intended to be limiting. For example, the first connection port 211 may be a USB-A port, a RJ45 port, a SD port, a Micro SD port, a HDMI port, a DisplayPort port or a 3.5mm headphone jack port which may be correspondingly adjusted according to the design or actual operation needs.

Details are provided as follows. Please refer to FIG. 2 and FIG. 4, the hub 20 of the present disclosure further includes a second expansion surface 25 and a third expansion surface 26. The second expansion surface 25 has at least one second connection port 251. In some embodiments, there is one second connection port 251, here is not intended to be limiting. For example, there are equal to or more than two second connection ports 251. In some embodiments, the second connection port 251 is a HDMI port as shown in FIG. 4, here is not intended to be limiting. For example, the second connection port 251 may be a USB-A port, a RJ45 port, a SD port, a Micro SD port, a VGA port, a DisplayPort port or a 3.5mm headphone jack port which may be correspondingly adjusted according to the design or actual operation needs.

Please refer to FIG. 1 and FIG. 2, the third expansion surface 26 has at least one third connection port 261. In some embodiments, there are two third connection ports 261, and the third connection port 261 is a USB-A port, here is not intended to be limiting. For example, there is one third connection port 261 or there are equal to or more than three third connection ports 261, or each of the third connection ports 261 is a different connector, such as a USB-A port, a RJ45 port, a SD port, a Micro SD port, a VGA port, a DisplayPort port or a 3.5mm headphone jack port.

In some embodiments, the first connection port 211, the second connection port 251 and each of the third connection ports 261 are fastened and electrically connected to the hub circuit board 24 of the hub 20, and respectively disposed at the rest three sides of the hub circuit board 24. As such, the signal is transmitted to the electronic device connected to the hub 20 through the hub circuit board 24 and the power and signal transmitting cable 23.

Accordingly, through the connector male head 221 of the hub 20 being inserted and electrically connected to the first connector female head 131 of the power supply 10, the electric power is sufficiently supplied to the hub 20, and the cable used for connecting the power supply 10 and the hub 20 is not needed, thus advantages of easy to be carried around, easy to be stored and having a better appearance are provided. Through the first positioning tenon 222 of the hub 20 being inserted and positioned in the second connector female head 132 of the power supply 10, the power supply 10 and the hub 20 are firmly connected and not easy to be loosened. The hub power device of the present disclosure has three different expansion surfaces, and the first expansion surface 21, the second expansion surface 25 and the third expansion surface 26 respectively have at least one connection port, thus a great expanding function is provided, and the required types and amounts of the connection ports may be adjusted with respect to the requirements of the skilled people in the art.

## Claims

1. A hub power device, comprising:
a power supply (10), comprising a first combination surface (13), wherein the first combination surface (13) comprises a first connector female head (131) and a second connector female head (132); and
a hub (20), comprising a first expansion surface (21) and a second combination surface (22), wherein the first expansion surface (21) comprises a first connection port (211), the second combination surface (22) comprises a connector male head (221) and a first positioning tenon (222);
wherein when the hub (20) is assembled with the power supply (10), the second combination surface (22) is attached to the first combination surface (13), the connector male head (221) is inserted and electrically connected to the first connector female head (131), and the first positioning tenon (222) is inserted and positioned in the second connector female head (132).

2. The hub power device according to claim 1, wherein the connector male head (221) and the first connector female head (131) are a USB-C connector assembly matching with each other, and the first positioning tenon (222) and the second connector female head (132) are connectors matching with each other.

3. The hub power device according to claim 2, wherein the first positioning tenon (222) and the second connector female head (132) are a USB-C connector assembly matching with each other.

4. The hub power device according to claim 1, wherein the first combination surface (13) further comprises a third connector female head (133), and the second combination surface (22) further comprises a second positioning tenon (223), when the hub (20) is assembled with the power supply (10), the second positioning tenon (223) is inserted and positioned in the third connector female head (133).

5. The hub power device according to claim 4, wherein the second positioning tenon (223) and the third connector female head (133) are connectors matching with each other.

6. The hub power device according to claim 4, wherein the second positioning tenon (223) and the third connector female head (133) are a USB-A connector assembly matching with each other.

7. The hub power device according to claim 4, wherein the first connector female head (131), the second connector female head (132) and the third connector female head (133) are arranged parallelly on the first combination surface (13), and the connector male head (221), the first positioning tenon (222) and the second positioning tenon (223) are arranged parallelly on the second combination surface (22).

8. The hub power device according to claim 1, wherein the first connection port (211) is a USB-A port, a RJ45, SD port, a Micro SD port, a HDMI port, a VGA port, a DisplayPort port or a 3.5mm headphone jack port.

9. The hub power device according to claim 1, wherein the hub (20) further comprises a second expansion surface (25), the second expansion surface (25) comprises a second connection port (251), and the second connection port (251) is a USB-A port, a RJ45 port, a SD port, a Micro SD port, a HDMI port, a VGA port, a DisplayPort port, or a 3.5 mm headphone jack port.

10. The hub power device according to claim 9, wherein the hub (20) further comprises a third expansion surface (26), the third expansion surface (26) comprises a plurality of third connection ports (261), and each of the third connection ports (261) is a USB-A port.

11. The hub power device according to claim 9, wherein the hub (20) further comprises a third expansion surface (26), the third expansion surface (26) comprises a third connection port (261), and the third connection port (261) is a USB-A port, a RJ45 port, a SD port, a Micro SD port, a HDMI port, a VGA port, a DisplayPort port or a 3.5mm headphone jack port.

12. The hub power device according to claim 1, wherein the hub (20) comprises a power and signal transmitting cable (23).
